# EUROPEAN PATENT SPECIFICATION

(11) **EP 2 818 295 B1**
(45) Date of publication and mention of the grant of the patent: **15.03.2017**
(21) Application number: 14174751.9
(22) Date of filing: 27.06.2014
(51) Int. Cl.: B29C 39/24

(54) **Device for pouring polyurethane and method for individually coating a number of objects with a layer of polyurethane**
Vorrichtung zum Gießen von Polyurethan und Verfahren zur individuellen Beschichtung einer Mehrzahl von Objekten mit einer Schicht aus Polyurethan
Dispositif pour verser du polyuréthane et procédé de revêtement individuel d'un certain nombre d'objets avec une couche de polyuréthane

(30) Priority: 28.06.2013 NL 2011060
(43) Date of publication of application: 31.12.2014
(73) Proprietor: Herikon B.V., 7601 PS Almelo (NL)
(72) Inventor: Verkerk, Dennis, 7601 PS Almelo (NL)
(74) Representative: Mink-Lindenburg, Charlotte Hildegard

(56) References cited:
- DD-A5- 285 045
- GB-A- 2 283 195

## Description

The present invention relates to a device for casting polyurethane and a method for individually coating a number of objects with a layer of polyurethane.

The present invention has for its object to provide a device and method of the type stated in the preamble which enable error-free casting of small quantities of polyurethane.

The device according to the invention comprises for this purpose a number of moulds, a holder for the moulds, a cover for the holder, wherein the cover is provided with a number of casting openings, wherein a recess is arranged around the casting openings for the purpose of receiving a predetermined quantity of polyurethane, this quantity at least corresponding to the quantity required for a moulded article or coating layer, and wherein the casting openings are configured for dropwise passage of the polyurethane into the moulds.

By having the polyurethane drip into the mould no air inclusion will occur in the coating layer, so that a high-quality moulded article or coating layer is obtained. The device according to the invention makes it possible to fill a series of moulds simultaneously or in immediate succession. In the case of small moulded articles or objects with a relatively small coating surface, for instance formed from a quantity of 0.5 to 25 g of polyurethane, the casting process can be performed extra quickly.

GB 2283195 describes a device for casting resin having the features of the preamble of claim 1.

In a first preferred embodiment the device according to the invention is configured to individually coat a number of objects with a coating layer of polyurethane. Each mould is configured for this purpose to receive at least one object.

The plastic polyurethane combines a high strength and stiffness with high elasticity and is therefore highly suitable as coating layer for protecting objects from wear which may for instance occur due to weather influences, frequent (rough) use and so on. Owing to the low density a polyurethane coating layer hardly adds to the overall weight of the object.

In a practical preferred embodiment the volume of the recesses corresponds to between 100% and 200%, preferably between 135% and 165%, of the quantity of polyurethane required for a moulded article or coating layer.

The moulds can be placed quickly and accurately in the holder.

The cover can be placed quickly and accurately on the holder.

In a further preferred embodiment each mould consists of two parts which are releasably attachable to each other with clamping of the object. Each object can be placed quickly and accurately in the mould.

According to an optimal preferred embodiment, the recess is funnel-shaped. The funnel shape slows the outflow and contributes toward the dropwise feed. The recess is preferably provided with a central casting opening.

The method according to the invention comprises the following steps of:
a) placing each object in a mould; placing each mould in a device according to the invention and placing the cover on the holder;
b) heating each mould at a predetermined first temperature and for a predetermined first time period;
c) feeding a predetermined quantity of polyurethane in dropwise manner to each mould, this quantity at least corresponding to the quantity required for the coating layer, this quantity is cast for this purpose into each recess;
d) removing the objects with coating layer from the moulds after a predetermined second time period;
e) allowing the objects with coating layer to cure at a predetermined second temperature and for a predetermined third time period.

According to the inventive concept, the polyurethane is fed to the moulds without pressure. The method and device according to the invention are hereby distinguished from the method and the device according to DD285045. The known method relates to dosing of moulding resin to moulds using pressure pulses. The device according to the invention is further distinguished in that the dosing unit forms a cover. In the known device there is expressly no direct contact between the dosing unit and the moulds.

In a further preferred embodiment of the method the first and/or the second temperature lies between 60 and 110 degrees.

According to a practical preferred embodiment of the method, the predetermined quantity of polyurethane amounts to twice the quantity required for the coating layer.

The method preferably comprises the step of processing the coating layer.

The device and method according to the invention are particularly suitable for coating metal objects, for instance magnets. Polyurethane adheres well to metal. In the case of magnets a thin layer of polyurethane will moreover not affect the magnetic action, or hardly so.

The invention will now be discussed in more detail with reference to the drawings, in which
Figure 1 shows a schematic view of a device according to the invention in a first preferred embodiment;
Figure 2 shows a cross-section of the device of figure 1; and
Figure 3 shows a schematic view of a device according to the invention in a second preferred embodiment.

The same components are provided in all figures with the same reference numerals.

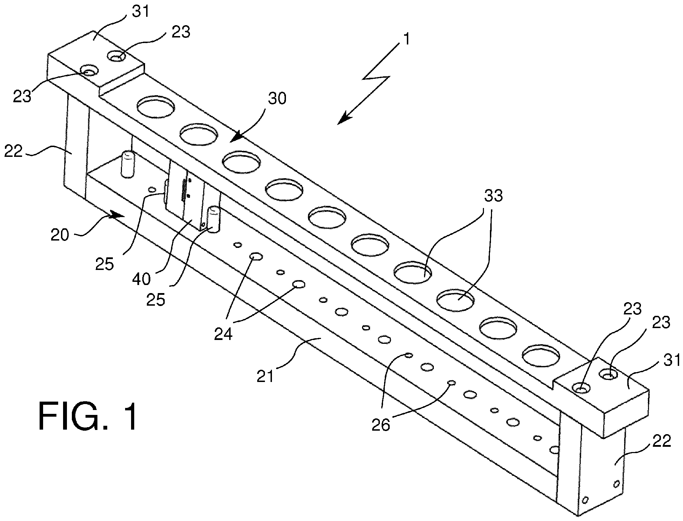

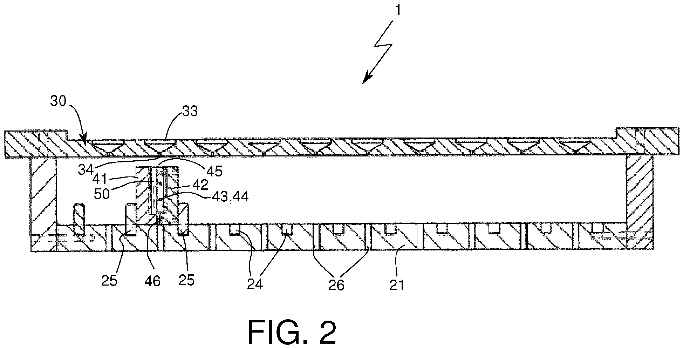

Figure 1 shows a schematic view of a first preferred embodiment of a device 1 according to the invention. Figure 2 shows a cross-section of device 1. Device 1 comprises a holder 20 intended for the purpose of receiving moulds 40. The objects which have to be coated according to the invention with a layer of polyurethane are each received individually in a mould 40. In figure 2 a magnet 50 is received in mould 40.

Holder 20 can be closed means of a cover 30. Cover 30 is provided with casting openings 34 which are arranged in a recess 33. The volume of recess 33 is adapted to a predetermined quantity of polyurethane needed to form the desired coating layer on object 50. For the purpose of forming a thin coating layer the casting openings 34 are configured for dropwise feed of the polyurethane to moulds 40. In the shown preferred embodiment recess 33 is generally funnel-shaped. Casting opening 34 is preferably located centrally in recess 33.

Holder 20 is provided with positioning means for defining positions for moulds 40 such that the mould positions are arranged under casting openings 34. In the shown preferred embodiment holder 20 is provided with a base or underside 21 on which the holder rests. Positioning holes 24 are arranged in base 21 for the purpose of receiving positioning pins 25. The distance between adjacent positioning holes 24 corresponds to the dimensions of the mould in longitudinal direction of base 21. Centring holes 26 are present between positioning holes 24. In the shown preferred embodiment centring holes 26 extend in transverse direction through base 21.

Cover 30 is releasably attachable to holder 20. In the shown preferred embodiment base 21 is provided on either side with upright walls 22 on which cover 30 rests. Cover 30 is provided on either side with outer ends 31 which take a somewhat thickened form. Outer ends 31 are provided with fixation holes 32 for receiving fixation pins 23 which protrude from walls 22.

In the preferred embodiment shown in figure 2 can be seen that each mould 40 consists of two parts 41, 42 which are releasably attachable to each other with clamping of object 50. The two mould parts are attachable to each other by means of centring pins 43 and centring holes 44. Each mould 40 is provided on the upper side with an inflow opening 45. Each mould 40 is provided on the underside with a further centring pin 46.

Holder 20, cover 30 and mould 40 are embodied in the preferred embodiment such that in use the inflow openings 45 in the mould are located under casting openings 34 in the cover. In the shown preferred embodiment centring holes 26 are configured to receive the further centring pins 46.

The predetermined quantity of polyurethane will in practice amount to more than the exact quantity required for the desired coating layer. The surplus polyurethane amounts to an average of about 40 to 60% and remains behind in recesses 33.

### EXAMPLE

Ten permanent magnets 50 are each laid individually in a mould part, after which the mould is closed by pressing the other part thereon. Each mould 40 is placed in holder 20 of device 1. Once holder 20 has been filled, cover 30 is placed thereon. Device 1 is then placed in the oven. After a heating time of twenty-five minutes at a temperature of 85°C the polyurethane can be casted into the moulds. Substantially four grams of polyurethane 80 Shore A is casted per magnet 50 into recess 33 above mould 40. After ten minutes the moulds can be opened and the magnets with coating layer can be released. The coating layer is then processed. Burrs are removed, the coating layer is degreased and so on. The magnets must then cure for sixteen to twenty-four hours at a temperature of preferably 100°C. The magnets are now coated with a layer of polyurethane with a thickness of substantially 0.5 mm.

The steps of the method according to the invention will be further discussed hereinbelow on the basis of the above stated example.

In a first step each object 50, in this example a magnet, is placed in a mould 40. The two parts 41 and 42 of the mould are moved apart, after which magnet 50 is placed in one of the parts. Centring pins 43 are arranged in the relevant mould part, after which magnet 50 is straightened by sight. The mould is then closed by pressing the other part onto centring pins 43 using centring holes 44.

In the preferred embodiment use is made of device 1 according to the invention. Moulds 40 are placed at the mould positions between adjacent positioning pins 25. When holder 20 is full, it is closed by placing cover 30 thereon. Device 1 with moulds 40 is then heated at a predetermined first temperature and for a predetermined first time period. The first time period lies between twenty and forty minutes, is preferably thirty minutes, more preferably 25 minutes. The first temperature lies between 60 and 110°C, preferably between 80 and 90°C, and is more preferably 85°C.

A predetermined quantity of polyurethane is fed dropwise to each mould 40. A predetermined quantity is casted for this purpose into each recess 33. The predetermined quantity of polyurethane at least corresponds to the quantity required for the desired coating layer. Recess 33 and casting opening 34 provide for the desired dropwise feed to the mould 40 lying thereunder. Although a polyurethane with a hardness of 80 Shore A is used in the example, it will be apparent to a skilled person that device 1 and the method according to the invention are suitable for diverse types of polyurethane of differing hardness, varying from 25 Shore A to 75 Shore D.

After a predetermined second time period magnets 50 with coating layer are removed from moulds 40. The second time period amounts to ten to twenty minutes. Cover 30 is removed from holder 20. All moulds 40 are preferably provided with a cap.

In practice the coating layer has to be processed . The processing can include different operations, including the removal of burrs, degreasing, applying a primer layer, filling small holes in the coating layer and so on.

Finally, the coated objects have to cure at a predetermined second temperature and for a predetermined third time period. The third time period amounts to sixteen to twenty-four hours. The second temperature amounts to 90 to 110°C, and is preferably 100°C.

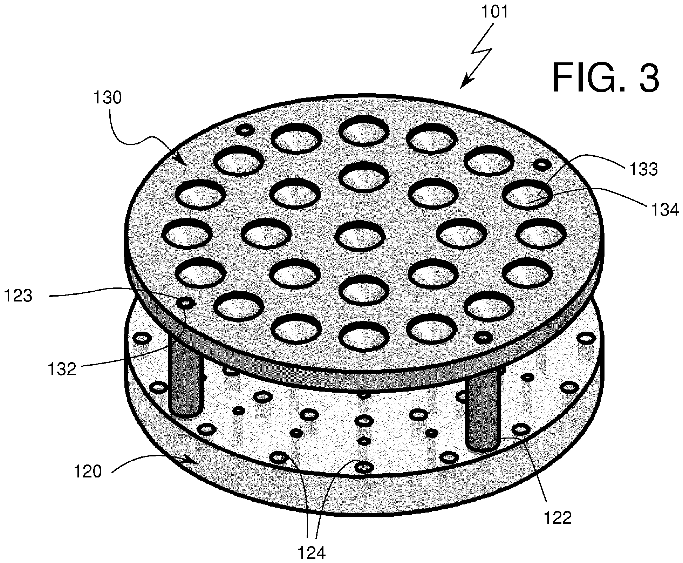

Figure 3 shows a schematic view of a device 101 according to the invention in a second preferred embodiment. Device 101 has an alternative form providing space for twenty-five moulds. The reference numerals in figure 3 are increased by the number 100 relative to figure 1.

The form of holder 120 and cover 130 is generally circular. Cover 130 is releasably attachable to holder 120. In the shown preferred embodiment cover 130 rests on uprights 122 arranged in base 121. Provided close to the peripheral edge of cover 130 are fixation holes 132 for receiving fixation pins 123 protruding from uprights 122.

Recesses 133 with casting openings 134 are arranged in concentric circles in cover 130. Positioning holes 124 and centring holes 126 define mould positions lying in a plurality of corresponding concentric circles in base 121 under the casting openings.

Device 101 provides a higher capacity, whereby greater numbers of moulds can be filled in a shorter filling time per mould. Device 101 moreover has no preferred direction and is highly suitable for automatic feed and discharge, for instance by means of a conveyor belt.

The invention is of course not limited to the shown and described preferred embodiments. The described and shown preferred embodiments relate to the coating of magnets with a protective layer of polyurethane which is sufficiently thin to guarantee the desired magnetic action. It will be apparent to the skilled person in the field that the device and method according to the invention are generally suitable for coating various objects with a thin layer of all types of polyurethane. It will be further apparent to the skilled person in the field that the device and method according to the invention are also suitable for forming small articles from all types of polyurethane.

The invention is generally based on the insight that dropwise feed of relatively small quantities of polyurethane to moulds enables error-free forming of small moulded articles or thin coating layers on small objects. A skilled person in the field must be deemed capable of performing the above following reading of this description.

The invention therefore extends generally to any embodiment which falls within the scope of the appended claims as seen in the light of the foregoing description and drawings.

## Claims

1. Device (1; 101) for casting polyurethane, comprising
- A number of moulds (40);
- A holder (20; 120) for the moulds; wherein the holder is provided with positioning means (24, 26; 124, 126) for defining positions for the moulds,
- A cover (30; 130) for the holder, wherein the cover is provided with a number of casting openings (34; 134), wherein a recess (33; 133) is arranged around the casting openings for the purpose of receiving a predetermined quantity of polyurethane, at least corresponding to the quantity required for a moulded article or coating layer, **characterized in that** each mould (40) consists of two parts (41, 42), which are releasably attachable to each other, and is provided on the upper side with an inflow opening (45), the holder comprises a base (21; 121) provided with uprights (22; 122), wherein the cover (30; 130) is releasably attachable to the holder and can rest on the uprights, the casting openings are situated above the mould positions when the cover rests on the uprights and the casting openings are configured for dropwise passage of the polyurethane into the moulds.

2. Device as claimed in claim 1 for individually coating a number of objects (50) with a coating layer of polyurethane, wherein each mould (40) is configured to receive at least one object.

3. Device as claimed in claim 1 or 2, wherein the volume of the recesses (33; 133) corresponds to between 100% and 200%, preferably between 135% and 165%, of the quantity of polyurethane required for a moulded article or coating layer.

4. Device as claimed in any of the foregoing claims, wherein the recess (33; 133) is funnel-shaped.

5. Device as claimed in any of the foregoing claims, wherein the recess (33; 133) is provided with a central casting opening (34; 134).

6. Device as claimed in any of the foregoing claims 2-5, wherein each mould (40) consists of two parts (41, 42) which are releasably attachable to each other with clamping of the object (50).

7. Device as claimed in any of the foregoing claims 2-6, wherein the objects are metal objects, for instance magnets (50).

8. Method for individually coating a number of objects with a layer of polyurethane, comprising the following steps of:
a) placing each object in a mould; placing each mould in a device (1; 101) according to any of the foregoing claims 2-7; and placing the cover (30; 130) on the holder (20; 120);
b) heating each mould at a predetermined first temperature and for a predetermined first time period;
c) feeding a predetermined quantity of polyurethane in dropwise manner to each mould, this quantity at least corresponding to the quantity required for the coating layer, this quantity is poured for this purpose into each recess;
d) removing the objects with coating layer from the moulds after a predetermined second time period;
e) allowing the objects with coating layer to cure at a predetermined second temperature and for a predetermined third time period.

9. Method as claimed in claim 8, wherein the first and/or the second temperature lies between 60 and 110 degrees.

10. Method as claimed in claim 8, or 9, wherein the predetermined quantity of polyurethane amounts to twice the quantity required for the coating layer.

11. Method as claimed in any of the foregoing claims 8-10, wherein step d) further comprises of processing the coating layer.

12. Method as claimed in any of the foregoing claims 8-11, wherein the objects are metal objects, for instance magnets.

## Patentansprüche

1. Vorrichtung (1; 101) zum Gießen von Polyurethan, umfassend
- eine Anzahl von Formen (40);
- eine Halterung (20; 120) für die Formen, wobei die Halterung mit Positioniermitteln (24, 25; 124, 126) zum Definieren von Positionen für die Formen versehen ist;
- eine Abdeckung (30; 130) für die Halterung, wobei die Abdeckung mit einer Anzahl von Gießöffnungen (34; 134) versehen ist, wobei eine Aussparung (33; 133) um die Gießöffnungen für den Zweck der Aufnahme einer vorbestimmten Menge von Polyurethan angeordnet ist, die zumindest der für einen Gießartikel oder eine Beschichtungsschicht erforderlichen Menge entspricht,
**dadurch gekennzeichnet, dass** jede Form (40) aus zwei Teilen (41, 42) besteht, die lösbar miteinander verbindbar sind und an der Oberseite mit einer Einflussöffnung (45) versehen ist; wobei die Halterung eine Basis (21; 121) umfasst, die mit Trägern (22; 122) versehen ist, wobei die Abdeckung (30; 130) lösbar mit der Halterung verbindbar ist und auf den Trägern aufliegen kann und wobei die Gießöffnungen über den Formpositionen angeordnet sind, wenn die Abdeckung auf den Trägern aufliegt und die Gießöffnungen für ein tropfenweises Durchtreten des Polyurethans in die Formen ausgebildet sind.

2. Vorrichtung gemäß Anspruch 1 zum individuellen Beschichten einer Anzahl von Gegenständen (50) mit einer Beschichtungsschicht aus Polyurethan, wobei jede Form (40) ausgebildet ist, um mindestens einen Gegenstand aufzunehmen.

3. Vorrichtung nach Anspruch 1 oder 2, wobei das Volumen der Vertiefungen (33; 133) zwischen 100% und 200%, vorzugsweise zwischen 135% und 165% der Menge an Polyurethan entspricht, die zur Herstellung eines Gießartikels oder einer Beschichtungsschicht erforderlich ist.

4. Vorrichtung nach einem der vorhergehenden Ansprüche, wobei die Ausnehmung (33; 133) trichterförmig ist.

5. Vorrichtung nach einem der vorhergehenden Ansprüche, wobei die Ausnehmung (33; 133) mit einer zentralen Gießöffnung (34; 134) versehen ist.

6. Vorrichtung nach einem der vorhergehenden Ansprüche 2-5, bei dem jede Form (40)
aus zwei Teilen (41, 42) besteht, die lösbar miteinander unter Klemmung des Gegenstands (50) verbindbar sind.

7. Vorrichtung nach einem der vorangehenden Ansprüche 2-6, wobei die Gegenstände Metallgegenstände, beispielsweise Magnete (50), sind.

8. Verfahren zum individuellen Beschichten einer Anzahl von Gegenständen mit einer Schicht aus Polyurethan, umfassend die folgenden Schritte:
a) Anordnen eines jeden Gegenstandes in einer Form; Anordnen jeder Form in einer Vorrichtung (1; 101) gemäß den Ansprüchen 2-7 und Aufbringen der Abdeckung (30; 130) auf die Halterung (20; 120);
b) Erwärmen jeder Form auf eine vorbestimmte erste Temperatur und während einer vorbestimmten ersten Zeitdauer;
c) tropfenweises Zuführen einer vorbestimmten Menge an Polyurethan in jede Form, wobei diese Menge mindestens der Menge entspricht, die für die Beschichtungsschicht erforderlich ist und wobei diese Menge zu diesem Zweck in jede der Ausnehmungen gegossen wird;
d) Entfernen der Gegenstände mit Beschichtungsschicht aus den Formen nach einer vorbestimmten zweiten Zeitdauer;
e) Aushärtenlassen der Gegenstände mit der Beschichtungsschicht bei einer vorbestimmten zweiten Temperatur während einer vorbestimmten dritten Zeitdauer.

9. Verfahren nach Anspruch 8, wobei die erste und/oder die zweite Temperatur zwischen 60 und 110°C beträgt.

10. Verfahren nach Anspruch 8 oder 9, wobei die vorbestimmte Menge des Polyurethans das Doppelte der für die Beschichtungsschicht erforderlichen Menge beträgt.

11. Verfahren nach einem der vorhergehenden Ansprüche 8-10 wobei Schritt d) ferner das Verarbeiten der Beschichtungsschicht umfasst.

12. Verfahren nach einem der vorhergehenden Ansprüche 8-11, wobei die Gegenstände Metallgegenstände, beispielsweise Magnete, sind.

## Revendications

1. Dispositif (1 ; 101) pour couler du polyuréthane, comprenant
- un certain nombre de moules (40) ;
- un support (20 ; 120) pour les moules, le support étant muni de moyens de positionnement (24, 26 ; 124, 126) pour définir des positions pour les moules ;
- un couvercle (30 ; 130) pour le support, le couvercle étant pourvu d'un certain nombre d'ouvertures de coulée (34 ; 134), un évidement (33 ; 133) étant disposé autour des ouvertures de coulée pour recevoir une quantité prédéterminée de polyuréthane correspondant au moins à la quantité nécessaire pour un article moulé ou une couche d'enrobage,
**caractérisé en ce que** chaque moule (40) est constitué de deux parties (41, 42) pouvant être reliées l'une à l'autre de manière réversible et possède sur sa face supérieure une ouverture d'entrée (45), le support comprend une base (21 ; 121) munie de montants (22 ; 122), le couvercle (30 ; 130) pouvant être attaché de manière réversible au support et pouvant reposer sur les montants, les ouvertures de coulée sont situées au-dessus des positions des moules lorsque le couvercle repose sur les montants, et les ouvertures de coulée sont configurées pour un passage goutte-à-goutte du polyuréthane dans les moules.

2. Dispositif selon la revendication 1 pour enrober individuellement un certain nombre d'objets (50) avec une couche d'enrobage en polyuréthane, dans lequel chaque moule (40) est configuré pour recevoir au moins un objet.

3. Dispositif selon l'une des revendications 1 et 2, dans lequel le volume des évidements (33 ; 133) correspond à 100% à 200%, de préférence à 135% à 165% de la quantité de polyuréthane nécessaire pour un article moulé ou une couche d'enrobage.

4. Dispositif selon l'une quelconque des revendications précédentes, dans
lequel l'évidement (33 ; 133) est en forme d'entonnoir.

5. Dispositif selon l'une quelconque des revendications précédentes, dans lequel l'évidement (33 ; 133) est muni d'une ouverture de coulée centrale (34 ; 134).

6. Dispositif selon l'une quelconque des revendications précédentes 2-5,
dans lequel chaque moule (40) est constitué de deux parties (41, 42) pouvant être reliées l'une à l'autre de manière réversible en bloquant l'objet (50).

7. Dispositif selon l'une quelconque des revendications précédentes 2-6, dans lequel les objets sont des objets métalliques, par exemple des aimants (50).

8. Procédé pour enrober individuellement un certain nombre d'objets par une couche de polyuréthane, comprenant les étapes suivantes consistant à
a) placer chaque objet dans un moule ; à placer chaque moule dans un dispositif (1 ; 101) selon l'une quelconque des revendications 2-7 ; et à placer le couvercle (30 ; 130) sur le support (20 ; 120) ;
b) à chauffer chaque moule à une première température prédéterminée et pendant une première période de temps prédéterminée ;
c) à introduire goutte à goutte une quantité prédéterminée de polyuréthane dans chaque moule, cette quantité correspondant au moins à la quantité nécessaire pour la couche d'enrobage, cette quantité étant versée dans ce but dans chacun des évidements ;
d) à enlever les objets avec leur couche d'enrobage des moules après une seconde période de temps prédéterminée ;
e) à permettre le durcissement des objets avec leur couche d'enrobage à une seconde température prédéterminée et pendant une troisième période de temps prédéterminée.

9. Procédé selon la revendication 8, dans lequel la première et/ou la seconde température sont comprises entre 60 et 110 degrés.

10. Procédé selon l'une des revendications 8 et 9, dans lequel la quantité prédéterminée de polyuréthane s'élève à deux fois la quantité nécessaire pour la couche d'enrobage.

11. Procédé selon l'une quelconque des revendications précédentes 8-10,
dans lequel l'étape d) comprend en outre le traitement de la couche d'enrobage.

12. Procédé selon l'une quelconque des revendications précédentes 8-11,
dans lequel les objets sont des objets métalliques, par exemple des aimants.
